# EUROPEAN PATENT SPECIFICATION

(11) **EP 2 681 426 B1**
(45) Date of publication and mention of the grant of the patent: **15.07.2015**
(21) Application number: 11791342.6
(22) Date of filing: 14.09.2011
(51) Int. Cl.: F02B 19/06, F02B 19/12, F02B 25/04, F02B 25/14, F02B 25/20

(54) **TWO-STROKE INTERNAL COMBUSTION ENGINE**
ZWEITAKTVERBRENNUNGSMOTOR
MOTEUR À COMBUSTION INTERNE À DEUX TEMPS

(30) Priority: 28.02.2011 IN CH05942011
(43) Date of publication of application: 08.01.2014
(73) Proprietor: TVS Motor Company Limited, Chennai 600 006 (IN); Indian Institute Of Science, Bangalore 560 012 (IN)
(72) Inventor: NARASIMHAN, Melkote Viraraghavachar, Bangalore 560 012 (IN); LAKSHMINARASIMHAN, Varadha Iyengar, Chennai 600 006 (IN); KUMAR, Nagendra, D, Chennai 600 006 (IN); MEGHANI, Santosh Kumar, Chennai 600 006 (IN); G, Hulikuntaraya, Chennai 600 006 (IN)
(74) Representative: Regimbeau
(86) International application number: PCT/IN2011/000636
(87) International publication number: WO 2012/117418

(56) References cited:
- DE-A1- 2 113 050
- DE-A1- 4 102 037
- GB-A- 2 223 802
- GB-A- 2 422 873
- US-A- 6 101 990

## Description

### TECHNICAL FIELD

The subject matter as described herein, in general, relates to engines, and in particular to a two-stroke internal combustion (IC) engine.

### BACKGROUND

Conventionally, internal combustion (IC) engines find use in industrial, transport, and marine applications. The IC engines may be classified based on the number of strokes per working cycle of the IC engine. For example, IC engines are classified as two-stroke engines or four stroke engines. The two-stroke engines complete various phases of the working cycle, i.e., intake, compression, combustion and expansion, and exhaust, in two strokes of a piston between its extreme positions. The various phases of the working cycle are accomplished in two strokes of the piston by performing the intake and exhaust stroked simultaneously during the end of the expansion and the beginning of the compression strokes. Owing to a power stroke for every two strokes of the piston in contrast to a power stroke for every four strokes in the case of the four stroke engines, such engines have an inherent advantage of high power-to-weight ratio as compared to the four stroke engines. An example of such an engine is shown in DE-2113050.

To achieve the intake of charge during the intake stroke and to expel the combustion product during the exhaust stroke, the conventional two-stroke engines are usually provided with ports in a cylinder wall. Due to layout of the ports in the cylinder wall and the simultaneous intake and exhaust strokes, a mixing of the charge and the combustion products occurs in the cylinder bore, Further, because of the overlapping intake and exhaust strokes, some amount of the charge may leak out from the cylinder bore during the exhaust stroke.

### SUMMARY

The subject matter described herein relates to a two-stroke internal combustion (IC) engine. The two-stroke IC engine includes a cylinder head and a cylinder block on which the cylinder head is mounted. The cylinder head include an auxiliary combustion chamber to achieve a first combustion of charge The cylinder block includes at least one cylinder bore having a piston reciprocating therein to drive a crankshaft, and a main combustion chamber to achieve a second combustion of charge. The main combustion chamber is formed between the piston and the cylinder head. The cylinder block further includes a plurality of transfer ports provided annularly in a cylinder wall along a periphery of the cylinder wall to induct a scavenging fluid into the cylinder bore.

These and other features, aspects, and advantages of the present subject matter will be better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### BRIEF DESCRIPTION OF DRAWINGS

The above and other features, aspects, and advantages of the subject matter will be better understood with regard to the following description, appended claims, and accompanying drawings where:
**Fig. 1a** illustrates a front sectional view of a two-stroke IC engine, according to an embodiment of the present subject matter.
**Fig. 1b** illustrates a sectional view of a cylinder head and a cylinder block of the two-stroke IC engine, according to an embodiment of the present subject matter.
**Fig. 2** illustrates a sectional view of the cylinder block of the two-stroke IC engine, according to an embodiment of the present subject matter.
**Fig. 3a** illustrates a sectional view of a cylinder bore of the two-stroke IC engine along section plane A-A' shown in **Fig. 1**, according to an embodiment of the present subject matter.
**Fig. 3b** illustrates a sectional view of a cylinder bore of the two-stroke IC engine along section plane A-A' shown in **Fig. 1**, according to another embodiment of the present subject matter.
**Fig. 4** illustrates a front view of a cylinder head assembly of the two-stroke IC engine, according to an embodiment of the present subject matter.
**Fig. 5a** and **5b** illustrate sectional views of a fuel supply pump of the two-stroke IC engine, according to an embodiment of the present subject matter.
**Fig. 6** illustrates a chain drive assembly of the two-stroke IC engine, according to an embodiment of the present subject matter.

### DETAILED DESCRIPTION

Conventional two-stroke engines are provided with ports in a cylinder wall for intake of charge and for the expulsion of the combustion products of the combustion of charge. In such a design of the two-stroke engines, the discharge of the combustion products from the ports causes thermal loading and distortions of the ports and of the cylinder wall. The distortion of the cylinder wall may lead to high friction between the piston and the cylinder wall and seizure of the piston.

Further, due to their design and layout, the conventional two-stroke engines are associated with certain characteristics, such as incomplete combustion of charge and leakage of charge. Leakage of charge occurs due to short circuiting when some of the charge is expelled along with the exhaust gases during scavenging and results in high unburnt fuel in the emissions and low fuel economy. The incomplete combustion of charge is attributed to dilution of charge because of ineffective scavenging of the combustion products. These characteristics may adversely affect the performance of the two-stroke engines in terms of the output power and the fuel economy.

Conventionally, to overcome the effects of the short circuiting and the dilution of charge, the charge supplied into the combustion chamber of these engines is usually rich with respect to the stoichiometric composition. Further, the air and fuel is premixed to form charge in a crankcase of the two-stroke engine, for example, a spark ignition two-stroke engine, before being supplied for combustion. However, such premixing results in incomplete disintegration of the fuel component in the charge, which in turn may aggravate the incomplete combustion of the charge and thereby causing emission of unburnt fuel. As a result, such engines suffer from a low fuel economy and a high emission of pollutants

The embodiments of the two-stroke IC engine, interchangeably referred to as an engine hereinafter, that are disclosed herein will help address the aforementioned issues in addition to providing several other advantages over the existing two-stroke engines.

The engine includes a crankcase housing a crankshaft and having a cylinder block mounted thereon. A piston, operably coupled to the crankshaft, is moveably disposed in a cylinder bore of the cylinder block. A motion of the piston is transmitted to the crankshaft through a connecting rod. In the cylinder bore, the piston reciprocates between two extreme positions - a top dead centre position (TDC) and a bottom dead centre position (BDC). The piston completes the various strokes of the working cycle, i.e., intake, compression, combustion and expansion, and exhaust, two strokes of the piston; one stroke from the TDC to the BDC and the other stroke from the BDC to the TDC.

According to an embodiment of the present subject matter, an auxiliary combustion chamber is formed in a cylinder head of the engine. In an implementation, the auxiliary combustion chamber directly receives the charge, through an inlet port. In said embodiment, the inlet port is provided with an inlet valve to regulate the opening and closing of the inlet port. Further, the cylinder head includes an exhaust port for the emission of combustion products. The exhaust port is provided with an exhaust valve to regulate the opening and closing of the exhaust port. In said embodiment, the inlet valve and the exhaust valve are actuated by a valve drive mechanism.

In an embodiment, the auxiliary combustion chamber is in fluid communication with a fuel supply pump. The fuel supply pump receives the charge from a fuelling device, such as a carburettor, and pressurizes the charge sufficiently to atomize and mix the fuel with the air in the charge. The atomization and mixing achieve a substantially homogenous mixture of air and fuel in the charge, which is then inducted into the auxiliary combustion chamber through the inlet port. In one implementation, a substantially small quantity of rich charge, as compared to the stoichiometric composition, is inducted into the auxiliary combustion chamber.

The induction of charge into the auxiliary combustion chamber is achieved after the exhaust port is closed, when the piston is moving from the BDC to the TDC and is substantially close to the TDC than to the BDC, The fuel supply pump described in the present subject matter can be a low-pressure fuel supply pump, and hence, has low wear and low maintenance and therefore a long life.

In an embodiment, an ignition element, such as a spark plug, is provided in the auxiliary combustion chamber to effect ignition of the charge. In an implementation, a partial combustion, also referred to as a first combustion, of the charge takes place in the auxiliary combustion chamber. The flame front of the expanding charge propagates into a main combustion chamber of the engine and a substantially complete combustion, also referred to as a second combustion, of the charge is achieved in the main combustion chamber. The main combustion chamber includes a compressed scavenging medium, for example, air or a lean mixture of charge, from the crankcase, at end of the compression stroke of the piston and this scavenging medium assists in the second combustion of the charge.

The scavenging medium in the main combustion chamber and the small quantity of rich charge supplied into the auxiliary combustion chamber by the fuel supply pump leads to the formation of layers of the charge of varying air fuel ratios inside the two combustion chambers, a phenomenon termed as stratification of the charge. The stratification of the charge inside the combustion chambers allows the engine to operate on an overall lean composition of the charge and, hence, reduces fuel consumption of the engine.

Further, according to an embodiment of the present subject matter, a plurality of transfer ports is provided annularly in the wall of the cylinder bore. The transfer ports are in fluid communication with the crankcase of the engine. In an implementation, the scavenging fluid, such as air or a lean mixture of the charge, is inducted into the crankcase which is then redirected into the cylinder bore at about the end of the expansion stroke through the transfer ports for scavenging the exhaust gases from the cylinder bore.

In said embodiment, the transfer ports are provided at an angle, both horizontally and vertically, to the wall of the cylinder bore thereby imparting a swirling motion to the scavenging fluid. The swirling motion of the scavenging fluid allows effective scavenging of the burnt gases without allowing the scavenging fluid to escape and, thus, helping in reduction of loss of scavenging fluid due to short circuiting. Therefore, a substantially large amount of the scavenging fluid is retained in the cylinder bore after the scavenging is complete The scavenging continues until the exhaust valve is open during the compression stroke of the piston, that is when the piston is moving towards the TDC from the BDC, and is substantially halfway between the TDC and the BDC.

As the compression stroke continues, scavenging fluid retained in the cylinder bore is compressed and is in a state of swirling motion, thereby causing turbulence. As the piston approaches the TDC position, the main combustion chamber is formed between the piston and the cylinder head, and the scavenging fluid is compressed in the main combustion chamber. The turbulence of the scavenging fluid in the main combustion chamber influences the charge in the auxiliary combustion chamber and facilitates effective mixing and combustion of the charge in both the combustion chambers. Furthermore, the provision of the exhaust port and the exhaust valve in the cylinder head of the engine allows uniflow scavenging of the exhaust gases. This causes the power output and the fuel economy of the engine to be high, and reduces the amount of unburnt fuel in the emissions from the engine.

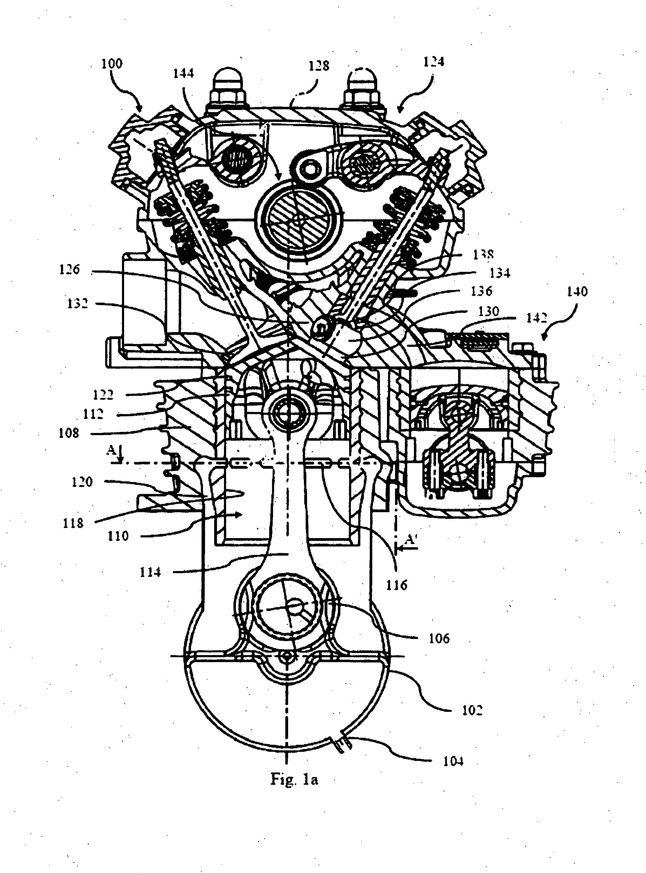

**Fig. 1a** illustrates a front sectional view of a two-stroke internal combustion engine **100**, according to an embodiment of the present subject matter. The two-stroke internal combustion engine **100**, referred to as an engine **100** hereinafter, includes a crankcase **102** connected to a charging device (not shown in figure) through an induction valve **104**, for example, a reed valve. According to an implementation, the induction valve **104** allows a unidirectional induction of a scavenging fluid, such as fresh air, into the crankcase **102**. In another example, the scavenging fluid may include a lean composition of charge formed by mixture of air and fuel. The crankcase **102** houses a crankshaft **106**. Further, a cylinder block **108** having a cylinder bore **110** is mounted on the crankcase **102**. The cylinder bore **110** has a piston **112** disposed therein, such that the piston **112** is capable of reciprocating inside the cylinder bore **110**. It may be understood that the engine **100** may have more than one cylinder bore **110**. In one embodiment, the cylinder block **108** includes the induction valve **104** to induct scavenging fluid into the crankcase **102**. Further, the piston **112** is connected to the crankshaft **106** through a connecting rod **114** to drive the crankshaft **106**.

Inside the cylinder bore **110**, the piston **112** has two extreme positions--a top dead centre (TDC) position when the engine **100** has completed a compression stroke and a bottom dead centre (BDC) position from where the piston **112** commences actuation at the beginning of the compression stroke.

According to an embodiment of the present subject matter, the cylinder bore **110** has a plurality of transfer ports **116** provided annularly along a periphery of a cylinder wall **118**. The cylinder wall **118** is a wall of the cylinder block **108** that defines the cylinder bore **110** therein. In said embodiment, the transfer ports **116** are disposed in the cylinder wall **118** in such a way that the transfer ports **116** are closer to the BDC position than they are to the TDC position of the piston **112**. According to an embodiment, an axis of each of the transfer ports **116** is inclined to the cylinder wall **118** of the cylinder bore **110** at an angle, the angle being measured in a horizontal plane. In another embodiment, the angle between the axes of the transfer ports **116** and the wall of the cylinder bore **110** may also be measured in a vertical plane. Each of the plurality of transfer ports **116** is connected to the crankcase through an induction passage **120**. Through the transfer ports **116**, the scavenging fluid is inducted into the cylinder bore **110** from the crankcase **102** during movement of the piston **112** from the TDC position to the BDC position. The inclination of the transfer ports **116** to the wall of the cylinder bore **110** provides a swirling motion of the scavenging fluid during the induction of the scavenging fluid into the cylinder bore **110**. The swirling motion of the scavenging fluid in the cylinder bore facilitates in scavenging and purging the cylinder bore **110** of combustion products during a movement of the piston from the BDC position to the TDC position. Further, opening and closing of the transfer ports **116** is controlled by the movement of the piston **112 in** the cylinder bore **110**.

The scavenging fluid inducted from the crankcase **102** entering the cylinder bore **110** may also include lubricant from the crankcase **102** entrained along with it. According to an embodiment, the engine **100** includes a filter element (not shown in the figure) to filter the scavenging fluid and separate the lubricant before the scavenging fluid enters the cylinder bore **110**. Due to the provision of the filter element, the scavenging fluid entering the cylinder bore is substantially free from the lubricant. Hence, during combustion of charge, the lubricant is not burnt, which improves the quality of exhaust emitted from the engine **100**. In said embodiments, the filter element is provided in the cylinder block **108** of the engine **100**. However, it may be understood that the filter element can be provided at other locations, for example, in the crankcase **102** or in a passage connecting the crankcase **102** to the transfer ports **116**.

Further, a plurality of piston rings **122** are provided on the piston **112** for providing a seal between the piston **112** and the cylinder bore **110**. The piston rings **122** also facilitate scraping of excess oil deposits off an inner wall of the cylinder bore **110**.

Further, a cylinder head assembly **124** is mounted on the cylinder block **108** to close one end of the cylinder bore **110**. The cylinder head assembly **124** includes a cylinder head **126** and a cylinder head cover **128**. A main combustion chamber **130** is formed between the cylinder head **126**, the cylinder walls **118**, and a crown of the piston **112** when the piston **112** is at the TDC position inside the cylinder bore **110** during a combustion cycle. In an embodiment, the cylinder head **126** has an exhaust port **132** for expelling combustion products from the main combustion chamber **130** during exhaust stroke. In other embodiments, the cylinder head **126** may have more than one exhaust port **132**.

Further, the cylinder head **126** includes an inlet port **134**. In an embodiment, the inlet port **134** is smaller in size than the exhaust port **132**. Bigger size of the exhaust port **132** facilitates effective exhaust of the combustion products from the exhaust port **132** as well as scavenging of the combustion products from the cylinder bore **110**. According to an embodiment, an auxiliary combustion chamber **136** is formed in the cylinder head **126** of the engine **100**. The auxiliary combustion chamber **136** is provided with an ignition element **138** to achieve combustion of the charge in the auxiliary combustion chamber **136**. In other embodiments, more than one ignition element **138** may be provided in the auxiliary combustion chamber **136** and the main combustion chamber **130** to facilitate the combustion of the charge. In an embodiment, the ignition element **138** is disposed substantially perpendicular to a vertical axis of the piston **112**. In another embodiment, the ignition element **138** is disposed substantially perpendicular to a central axis of the auxiliary combustion chamber **136**.

In one implementation, a partial combustion, referred to as first combustion, of charge takes place in the auxiliary combustion chamber **136**. The auxiliary combustion chamber **136** opens into the main combustion chamber **130** such that during the expansion stroke, a flame front produced by the combustion of charge in the auxiliary combustion chamber **136** spreads into the main combustion chamber **136** and the combustion of charge is substantially completed in the main combustion chamber **130**. The substantially complete combustion of charge in the main combustion chamber **130** is interchangeably referred to as second combustion of charge. In an embodiment, the auxiliary combustion chamber **136** includes about 70% of a total combustion chamber volume and the main combustion chamber **130** includes about 30% of the total combustion chamber volume.

During the movement of the piston **112** from the TDC to the BDC, at about the end of the expansion stroke, the transfer ports **116** are uncovered and the swirling scavenging medium scavenges the combustion products. Further, during the movement of the piston **112** from the BDC to the TDC, the scavenging medium is compressed in the cylinder bore **110**.

In addition, the auxiliary combustion chamber **136** is in fluid communication with a fuel supply pump **140** through an inlet passage **142**. The fuel supply pump **140** inducts a pressurized charge of air and fuel for combustion into the auxiliary combustion chamber **136** through the inlet port **134**. In one embodiment, the inlet passage **142** is formed in the cylinder head **126** in substantial proximity of the combustion chambers **130** and **136**. In said embodiment, a substantially complete vaporization of the fuel in the pressurized charge is achieved in the inlet passage **142** because of the proximity to the combustion chambers **130** and **136**. In addition, the pressurization of charge facilitates substantial atomization and disintegration of the charge before it is supplied to the engine **100** for combustion. Such pressurization assists in complete burning of the charge and hence improves the efficiency of the engine **100**.

In said embodiment, the fuel supply pump **140** is housed in the cylinder block **108** of the engine **100** and obtains a drive from the crankshaft **106**. The fuel supply pump **140** may be integrated with other parts of the engine **100** as well, such as the crankcase **102** or the cylinder head **122**. The fuel supply pump **140** may obtain the drive from the engine **100**. In an embodiment, the fuel supply pump **140** obtains the drive from the crankshaft **106** of the engine **100** through a chain drive assembly (not shown in the figure). In said embodiment, a crankshaft sprocket wheel (not shown in the figure) is mounted on an end of the crankshaft **106** to provide a drive to the fuel supply pump **140**. A phase difference may be provided between the drive of the crankshaft **106** and the drive of the fuel supply pump **140** so that the induction the charge into the auxiliary combustion chamber **136** is achieved substantially before the piston **112** reaches the TDC position.

In operation, the fuel supply pump **140** inducts the charge into the auxiliary combustion chamber **136** when the piston **112** is compressing the air inducted in the main combustion chamber **130** through the transfer ports **116**. During this phase, the piston **112** is said to be in a compression stroke and lies approximately midway in the compression stroke. Accordingly, during this phase, the main combustion chamber **130** has the scavenging fluid, such as fresh air or a lean composition of charge, while the auxiliary combustion chamber **136** has a small quantity of relatively rich composition of the charge as compared to that in the main combustion chamber **130** creving layers or strata of the charge with different compositions of air and fuel.

Due to this stratification of charge, a plurality of strata of charge is formed in the two combustion chambers **130** and **136**. The different strata of charge differ in the composition of the air and fuel. This allows the engine **100** to operate on an overall lean composition of charge. Hence, the overall fuel consumption of the engine **100** is low.

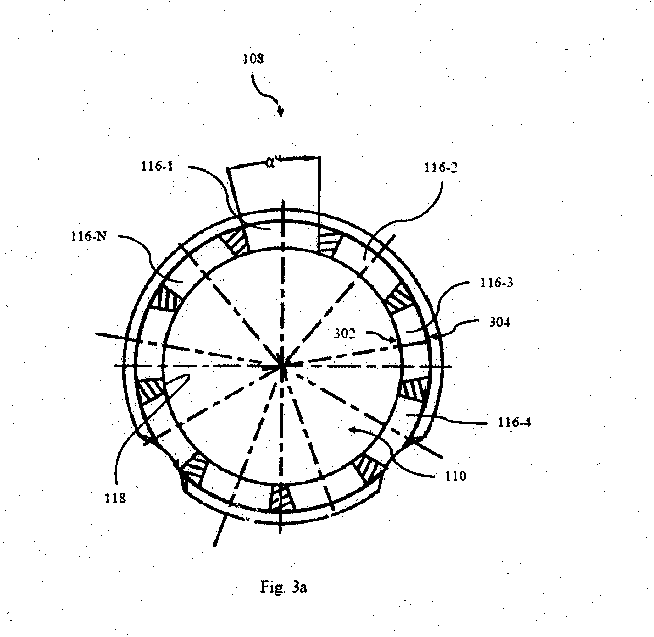

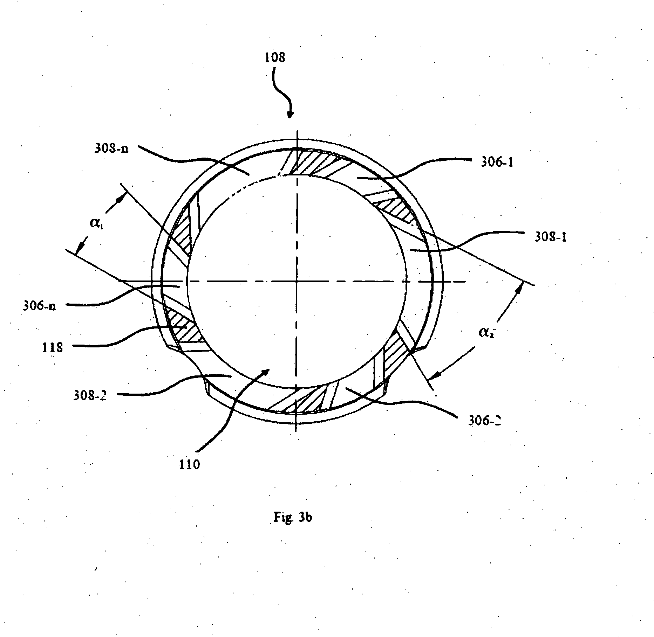

In addition, the cylinder head assembly **124** includes a valve train assembly **144**. In one embodiment, the valve train assembly **144** is formed in the cylinder head **126** and housed inside the cylinder head assembly **124**. The valve train assembly **144** is described in detail in the description of **Fig 3**.

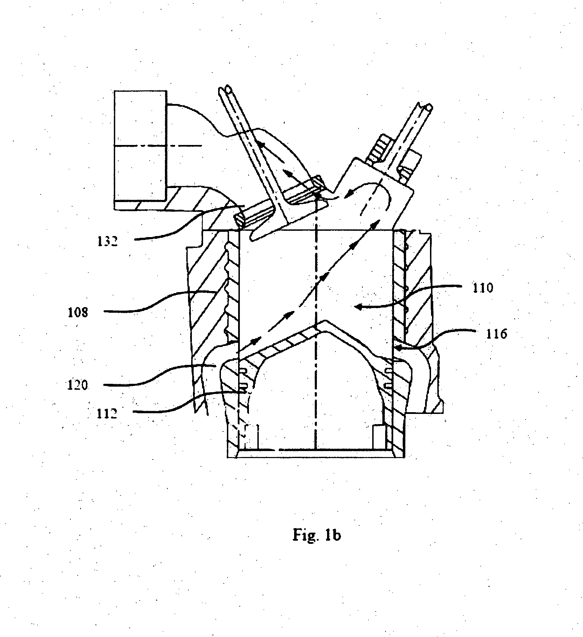

**Fig. 1b** illustrates a sectional view of the cylinder block **108** and the cylinder head **126**, according to an embodiment of the present subject matter. **Fig. 1b** illustrates the position of the piston **112** during the exhaust stroke. The piston **112** is shown in proximity of the BDC position, moving towards the TDC position, when the plurality of transfer ports **116** is not covered by the piston **112**.

During the exhaust stroke, the scavenging medium enters the cylinder bore **110** through the transfer ports **116 and expels** the combustion products from the cylinder bore **110** through the exhaust port **132**. According to an embodiment, the piston **112** is a deflector type piston, having a conical head. The deflector shape of the piston **112** directs the scavenging medium in the direction of the auxiliary combustion chamber **136** and facilitates the expulsion of the combustion products from the auxiliary combustion chamber **136**. Hence, the deflector type shape of the piston **112** improves scavenging of the cylinder bore **110**, and hence, enhances burning of the charge in the main combustion chamber **130** and the auxiliary combustion chamber **136**.

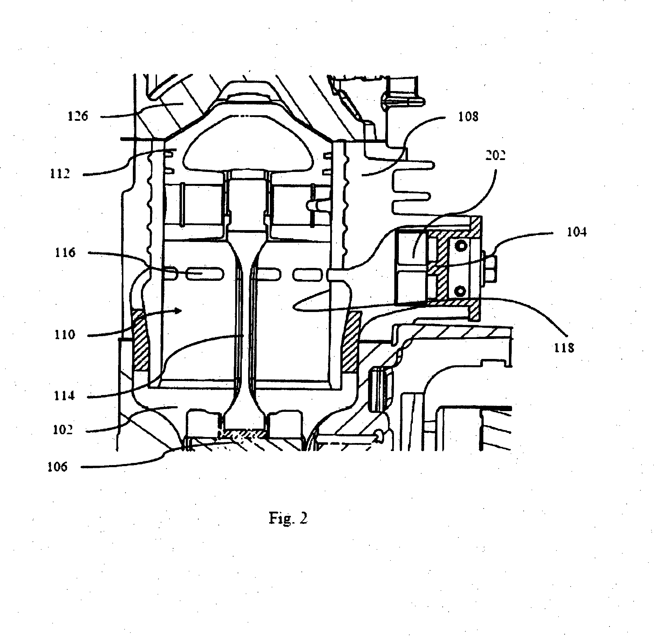

**Fig. 2** illustrates front sectional view of the cylinder block **108** of the engine **100**, according to an embodiment of the present subject matter. During the induction of the scavenging fluid into the cylinder bore **110** from the crankcase **102**, some lubricant particles may be entrained along with the scavenging fluid. In an embodiment, a filter element **202** is provided in the cylinder block **108** such that the scavenging fluid inducted from the crankcase into the cylinder bore **110** passes through the filter element **202** before entering the cylinder bore **110**. The filter element **202** filters excess lubricant particles in the scavenging fluid in the crankcase **102** and prevents the entry of lubricant particles into the cylinder bore **110** that may otherwise be burnt during combustion. Hence, the provision of the filter element facilitates low pollutants in exhaust emissions from the engine **100**.

As mentioned earlier, in one embodiment, the induction valve **104** is provided in the cylinder block **108**. In said embodiment, the filter element **202** may be integrated with the induction valve **104**, and the scavenging fluid is inducted into the crankcase **102** through the induction valve **104** and the filter element **202**. In such a case, the stream of incoming scavenging fluid may clean the filter element **202** by drawing the lubricant particles in the filter element **202** back into the crankcase **102**. This ensures longevity of the filter element **202**.

It may be understood that in other embodiments, the filter element **202** may be provided separately from the induction valve **104** and in different locations, such as the crankcase **102** or in a passage connecting the crankcase **102** to the transfer ports **116**. Further, as mentioned earlier, the induction valve **104** may be disposed in other positions, for example, in the crankcase **102**.

**Fig. 3a** and **3b** illustrate sectional views of the cylinder block **108** of the engine **100** along a section plane A-A' shown in **Fig. 1a**, according to two different embodiments of the present subject matter. In **Fig 3a** and **3b**, the cylinder bore **110** in the cylinder block **108** is shown.

The sectional view **300** depicts the plurality of transfer ports **116-1, 116-2,.....116-n,** collectively referred to as the transfer ports **116.** As mentioned earlier, the transfer ports **116** are formed in the cylinder wall **118** and are provided to induct the scavenging fluid, for example, fresh air, from the crankcase **102** into the cylinder bore **110**.

According to an embodiment, each of the transfer ports **116** is formed in the shape of a truncated cone, for example, a right cone or an oblique cone. In one embodiment, shown in **Fig. 3a**, each of the transfer ports **116**, formed in conical shape, has an apex angle α and has a base at an opening of the induction passage **120** into the respective transfer port **116**. The apex angle α may be defined as the included angle of the lateral surface of the cone, the angle being measured on a plane passing through an imaginary apex and the base of the truncated cone. In said embodiment, the apex angle is about 10° to 30 to provide a swirling motion to the scavenging fluid entering the cylinder bore **110**. Further, in said embodiment, an axis of each of the transfer ports **116** can be inclined to the cylinder wall **118** in a horizontal plane, in a vertical plane, or in both the planes.

In another embodiment, shown in **Fig. 3b**, the plurality of conical transfer ports are formed in the cylinder wall **118** as two sets transfer ports, namely, a first set of transfer ports **306-1, 306-2,...306-**n and a second set of transfer ports **308 -1, 308-2,....308-n**. The first set of transfer ports **306-1, 306-2,...306-n** are collectively referred to as the first set of transfer ports **306**, and the second set of transfer ports **308 -1, 308-2,...308-n** are collectively referred to as the second set of transfer ports **308**. Each transfer port in the first set of transfer ports **306** has a first apex angle α**₁** and each transfer port in the second set of transfer ports **308** has a second apex angle α**₂**. In an embodiment, the first apex angle (α**₁**) is about 17° and the second apex angle (α**₂**) is about 32°. Further, the first set of transfer ports and the second set of transfer ports are positioned alternatively with respect to each other, as shown in **Fig. 3b**.

Further, each of the plurality of transfer ports **116** in **Fig. 3a** **and** each transfer port in first set of transfer ports **306** and the second set of transfer ports **308** in **Fig. 3b**, formed as a truncated cone, includes a first aperture **302** and a second aperture **304**. The first aperture **302** is provided at the cylinder wall **118** and the second aperture **304** is provided at an opening of the induction passage **120** into the respective transfer port **116**. According to an embodiment, a diameter of the first aperture **302** is smaller than a diameter of the second aperture **304**.

As a result of the geometry of the transfer ports **116, 306, 308** shown in **Fig. 3a** and **3b**, the scavenging fluid inducted from the crankcase **102** enters the cylinder bore **110** in a swirling motion. The swirling motion of the scavenging fluid allows for retention of large amount of scavenging fluid in the cylinder bore **110** after scavenging of the cylinder bore **110**, and reduces loss of scavenging fluid due to short circuiting. Further, the swirling motion of the scavenging fluid creates turbulence inside the cylinder bore **110** and facilitates effective mixing and combustion of charge.

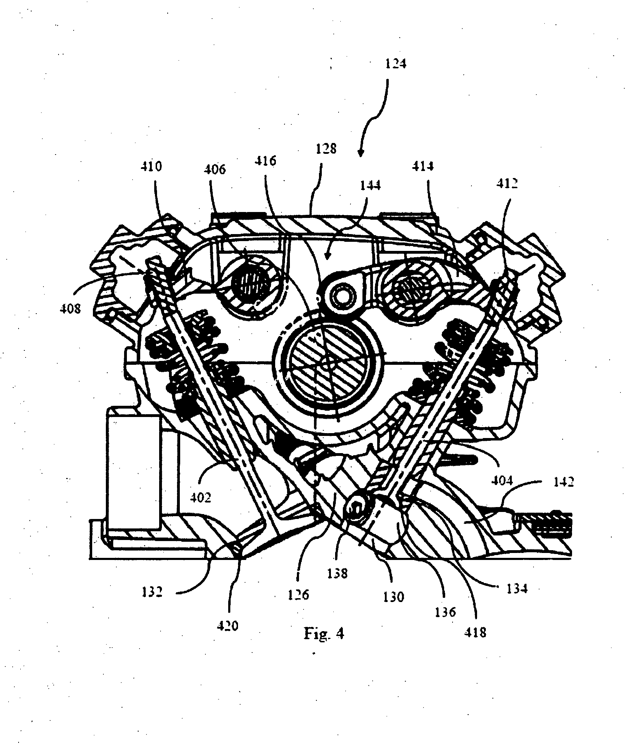

**Fig. 4** illustrates a front view of the cylinder head assembly **124** of the engine **100**, according to an embodiment of the present subject matter. As mentioned earlier, the cylinder head assembly **124** includes the valve train assembly **144**, housed inside the cylinder head **126** and the cylinder head cover **128** of the cylinder head assembly **124**. In an embodiment, the valve train assembly **144** is mounted on the cylinder head **126**.

In one embodiment, the valve train assembly **144** includes an exhaust valve **402** and an inlet valve **404**. In said embodiment, the exhaust valve **402** is provided at the exhaust port **132** in the cylinder head **126**, and the inlet valve **404** is provided at the inlet port **134**.

The exhaust valve **402** and the inlet valve **404** regulate the opening and closing of their respective ports, i.e., the exhaust port **132** and the inlet port **134**, at which they are provided. According to an embodiment, the valve train assembly **144** further includes a camshaft **406 to** actuate the exhaust valve **402** and the inlet valve **404**.

The camshaft **406** may obtain a drive from the engine **100**, for example, through a chain drive. In such a case, a camshaft sprocket wheel (not shown in the figure) mounted on the camshaft **406** receives a drive from the crankshaft **106** through the crankshaft sprocket wheel and a chain (not shown in the figure). In said embodiment, the exhaust valve **402** is operably coupled to the camshaft **406** via a first push rod **408** and a first rocker arm **410** (partially shown in **Fig. 1a**).

Similarly, the inlet valve **404** is operably coupled to the **camshaft 406** via a second push rod **412** and a second rocker arm **414**, respectively. In said embodiment, the exhaust valve **402** and the inlet valve **404** are spring loaded valves. In said embodiment, the camshaft **406** includes a plurality of cam lobes (not shown in the figure), corresponding to each of the exhaust valve **402** and the inlet valve **404**, to actuate the valves **402** and **404**.

Further, the first rocker arm **410** and the second rocker arm **414** include a first follower (not shown in **Fig. 1a**) and a second follower **416**, respectively. In one embodiment, the first follower and the second follower **416** are roller type followers.

The operation of the inlet valve **404** is explained as follows. The second follower **416** is operably coupled to the corresponding lobe of the camshaft **406** for actuating the second rocker arm **414** and the second push rod **412**. The actuation causes the second push rod **412** to push the inlet valve **404**. As the inlet valve **404** is pushed, it is lifted of an inlet valve seat **418** in the cylinder head **126** to open the inlet port **134**. As the inlet port **134** is opened, the pressurized charge from the fuel supply pump **140** enters the auxiliary combustion chamber **136** through the inlet passage **142** and the inlet port **134**. As mentioned earlier, the combustion of charge is achieved in the auxiliary combustion chamber **136**. During the combustion in the auxiliary combustion chamber **136**, a substantial amount of lateral thrust due to a high pressure of the combustion products is borne by the auxiliary chamber walls, and not by the piston. Since, the piston **112** bears a small amount of the lateral thrust due to combustion, the vibrations and the noise of the engine **100** are low.

The operation of the exhaust valve **402** may be understood in a similar manner. The actuation of the first follower of the first rocker arm **410** by the corresponding lobe of the camshaft **406** causes the first push rod **408** to actuate the exhaust valve **402**. On such an actuation, the exhaust valve **402** is lifted off an exhaust valve seat **420** in the cylinder head **126** to open the exhaust port **132**. The opening of the exhaust port **132** allows the expulsion of the combustion products from the cylinder bore **110**. The expulsion of the combustion products from the cylinder bore **110** is alded by the swirling of scavenging fluid entering the cylinder bore **110** through the transfer ports **116**. The provision of the exhaust port **132** in the cylinder head **126** of the engine **100** allows uniflow scavenging of the cylinder bore **110** by the scavenging fluid. Such a scavenging facilitates a thorough purging of the cylinder bore **110** and enhances fuel economy and efficiency of the engine **100**.

Further, the provision of the exhaust port **132** and the exhaust valve **402** in the cylinder head **110** makes it possible to have a piston **112** of a relatively small skirt length. Since, the piston **112** of the engine **100** has a small skirt length and has less area of contact with the wall of the cylinder bore **110**, it facilitate to reduce friction between the piston **112** and the wall of the cylinder bore **110**, thus ensuring longevity and durability of the engine. Further, the piston **112** with small skirt length has a small weight and therefore less inertia. Hence, the engine **100** expends less thrust of combustion in overcoming the inertia of the piston **112**.

In addition, with the provision of the exhaust port **132** in the cylinder head **126**, the thermal loading and distortions due to the combustion products occurs in the cylinder head **126** and not at the cylinder walls **118**, hence, ensuring durability of the engine **100**.

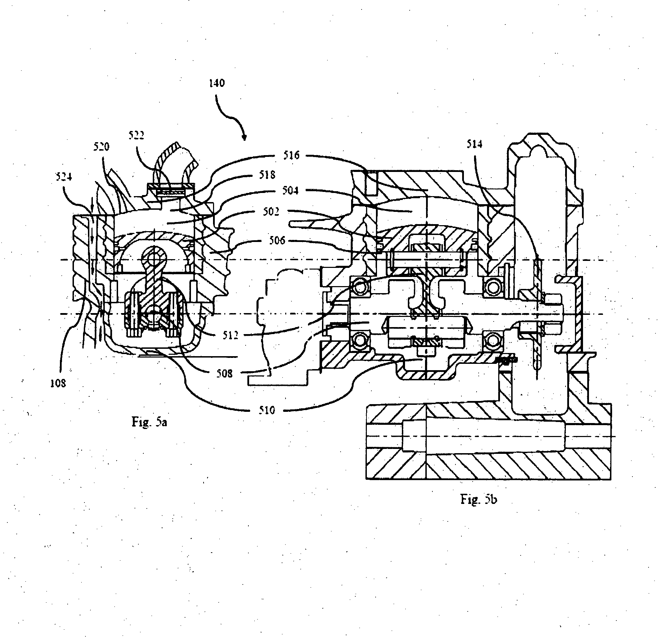

**Fig. 5a** and **Fig.5b** illustrate a front and side sectional view, respectively, of the fuel supply pump **140** of the engine **100**, according to an embodiment of the present subject matter. In one embodiment, the fuel supply pump **140** is a reciprocating type pump and includes an auxiliary piston **502** reciprocating inside an auxiliary bore **504**. In an embodiment, the auxiliary piston **502** has a small skirt length to reduce contact surface of the auxiliary piston **502**, and hence friction between the piston and a wall of the auxiliary bore **504**. Such a design of the auxiliary piston **502** ensures durability of the fuel supply pump **140**. The auxiliary bore **504** is formed in an auxiliary cylinder block **506** of the fuel supply pump **140**. In an embodiment, the auxiliary cylinder block **506** is formed from the cylinder block **108** of the engine **100**, and hence the fuel supply pump **140** is integrated in the cylinder block **108**. In another embodiment, the auxiliary bore **504** is formed in the crankcase **102** of the engine **100**. In yet another embodiment, the fuel supply pump **140** is formed in the cylinder head **126** of the engine **100**.

The fuel supply pump **140** further includes an auxiliary crankshaft **508** housed in an auxiliary crankcase **510**. The auxiliary piston **502** is operably coupled to the auxiliary crankshaft **508** through an auxiliary connecting rod **512** such that a rotational motion of the auxiliary crankshaft, **508** is transferred into a reciprocatory motion of the auxiliary piston. **502**.

In an implementation, the auxiliary crankshaft **508** of the fuel supply pump **140** obtains a drive from the crankshaft **106** of the engine **100**. In one embodiment, the auxiliary crankshaft **508** obtains the drive from the crankshaft **106** through a chain drive assembly (not shown in the figure). Similarly, other drive mechanisms may also be used to provide a drive from the crankshaft **106** to the auxiliary crankshaft **508**.

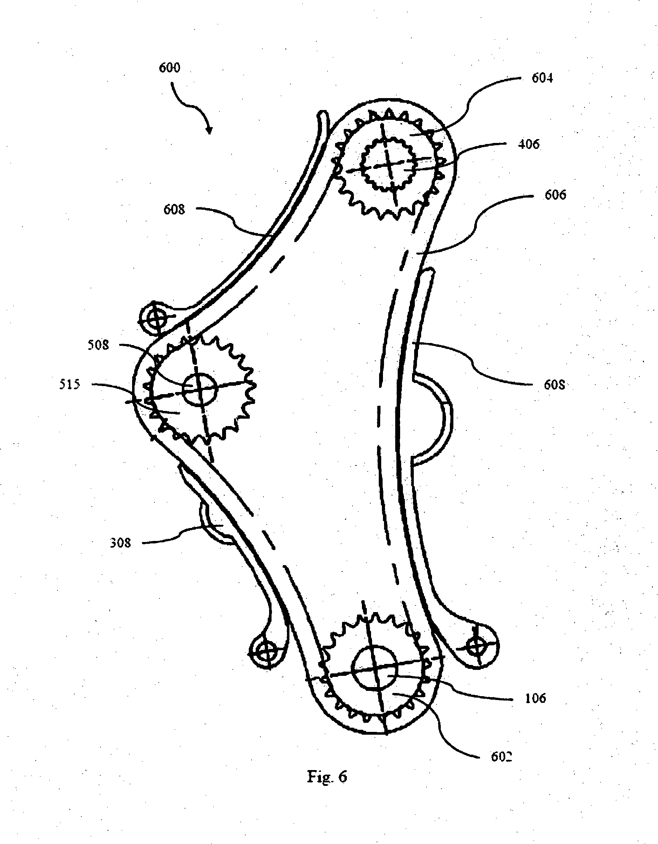

In case of a chain drive assembly providing the drive to the auxiliary crankshaft **508**, an end of the auxiliary crankshaft **508** has an auxiliary sprocket wheel **514** mounted and fixed thereon, as shown in **Fig. 5b****.** The auxiliary sprocket wheel **514** is coupled to the sprocket wheel mounted on the crankshaft **106** of the engine **100** to achieve the drive. The mechanism of a chain drive assembly is explained in further detail in **Fig. 6**.

Further, the fuel supply pump **140** includes an auxiliary cylinder head **516** mounted on the auxiliary cylinder block **506**. The auxiliary cylinder head **516** includes an auxiliary inlet port **518** and an auxiliary exhaust port **520**. In an embodiment, the auxiliary inlet port **518** is connected to a fuelling device (not shown in the figure), such as a carburettor, and receives a charge of fuel and air from the fuelling device through a charging valve **522**. In one example, the charging valve **522** is a reed valve, which allows a unidirectional flow of the charge from the fuelling device into the auxiliary bore **504** of the fuel supply pump **140** through the auxiliary inlet port **518**. In one implementation, a small quantity of the charge is received by the fuel supply pump **140** from the fuelling device. In said implementation, the charge is richer in composition as compared to the corresponding stoichiometric composition of the charge for an operation, for example, full load operation or part load operation, of the engine.

In another embodiment, the auxiliary bore **504** of the fuel supply pump **140** includes an inlet port (not shown in the figure) connected to the fuelling device for the induction of charge. In said embodiment, the inlet port is formed in the auxiliary cylinder block **506** slightly above a BDC position of the auxiliary piston **502** in the auxiliary bore **504**. The charge is inducted into the fuel supply pump **140** when the auxiliary piston **502** is approaching the BDC position. Hence, the reciprocating motion of the auxiliary piston **502** regulates the opening and closing of the inlet port for the induction of charge.

The charge entering the auxiliary bore **504** is pressurized by the reciprocating motion of the auxiliary piston **502**. In one embodiment, the fuel supply pump **140** is a low-pressure pump and has a compression ratio of about 5:1. The compression ratio may be understood as ratio of volume of auxiliary bore **504** when the auxiliary piston **502** is at a BDC position to the volume of the auxiliary bore **504** when the auxiliary piston **502** is at a TDC position. In an embodiment, a volumetric capacity of the fuel supply pump **140** is about 20% a volumetric capacity of the engine **100**. In said embodiment, the capacity of the fuel supply pump **140** is in a range of about 10 cubic centimeters (cc) to 20 cubic centimeters (cc). However, it will be understood that the capacity of the fuel supply pump **140** can be varied according to the engine size and capacity.

Further, the auxiliary exhaust port **520** is connected to the inlet passage **142** leading to the inlet port **134** of the engine **100**. In one embodiment, the auxiliary exhaust port **520** includes a discharge valve (not shown in the figure) to regulate the induction of pressurized charge from the fuel supply pump **140** into the inlet passage **142**. In an implementation, the discharge valve is a pressure-regulated check valve and is calibrated in such a way that it allows the pressurized charge to enter the inlet passage **142** when the pressure of the charge is above a predetermined value.

Furthermore, the fuel supply pump **140** is cooled by a fluid coolant flowing through a fluid passage **524** formed in the cylinder block **108** of the engine **100**. In **Fig. 5a**, the flow of the coolant through the fluid passage **524** is depicted by arrows.

**Fig. 6** illustrates a chain drive assembly **600** of the engine **100**, according to an embodiment of the present subject matter. **Fig. 6** shows the chain drive assembly **600** in a rear-end view of the engine **100**. In said embodiment, the chain drive assembly **600** includes a crankshaft sprocket wheel **602**, a camshaft sprocket wheel **604**, and the auxiliary sprocket wheel **514**. As mentioned earlier, the crankshaft, sprocket wheel **602**, the camshaft sprocket wheel **604**, and the auxiliary sprocket wheel **514 are** mounted on the crankshaft **106**, the camshaft **406**, and the auxiliary crankshaft **508,** respectively. The crankshaft sprocket wheel **602**, the camshaft sprocket wheel **604**, and the auxiliary sprocket wheel **514** of the chain drive assembly are coupled to each other by a chain **606**. In an embodiment, the chain **606** serves as a timing mechanism of the chain drive assembly **600**.

The crankshaft sprocket wheel **602** obtains its drive from the crankshaft, which obtains its drive from the piston **112** reciprocating in the cylinder bore **110** as a result of the combustion of charge in the combustion chambers **130** and **136**. The crankshaft sprocket wheel **602** then transmits the drive, through the chain **606**, to the camshaft sprocket wheel **604** to drive the camshaft **406** for actuating the exhaust valve **402** and the inlet valve **404**, and to the auxiliary sprocket wheel **514** to drive the auxiliary crankshaft **508** for operating the fuel supply pump **140**.

In one embodiment, the chain drive assembly **600** is a step-less chain drive assembly, that is, the sprocket wheels **602**, **604**, and **514** are coupled to each other through the chain **606** without any reduction in the drive ratio. This facilitates synchronization of the rotation of the crankshaft **106**, the opening and closing of the exhaust valve **402** and the inlet valve **404**, and the rotation of the auxiliary crankshaft **508** of the fuel supply pump **140**, for effective functioning of the engine **100**.

Further, the chain drive assembly **600** includes a plurality of chain tensioners **608**, collectively referred to as tensioners **608**. The tensioners **608** maintain proper tension in the chain **606** to reduce vibrations and noise generated by the chain **606** during operation. The tensioners **608** achieve a compensation for the wear that the chain **606** undergoes and, hence, facilitates avoiding errors, such as tooth-skip, during the transmission of drive through the chain **606**. The tensioners **608** also help in reducing synchronization errors between the crankshaft sprocket wheel **602**, the camshaft sprocket wheel **604**, and the auxiliary sprocket wheel **514**, which may occur due to loss in tension of the chain **606**.

It may be understood that in other embodiments, the chain drive assembly **600** may include more than one chain **606** to separately drive the auxiliary crankshaft **508** and the camshaft **406**. Similarly, in other embodiments, the chain drive may include sprocket wheels other than the crankshaft sprocket wheel **602**, the camshaft sprocket wheel **604**, and the auxiliary sprocket wheel **514**.

The described subject matter and its equivalent thereof have many advantages, including those which are described below. The provision of the auxiliary combustion chamber **136** in the engine **100** facilitates the stratification of charge in the combustion chambers **130**, **136** and as a result the engine **100** is capable of operating on a .substantially lean composition of charge as compared to the stoichiometric composition. Such an operation of the engine **100** facilitates in the engine **100** in achieving high fuel economy and low pollutant emissions in the exhaust.

In an embodiment, the pressure in the auxiliary combustion chamber **136** is less than the pressure in the fuel supply pump **140** during the injection of charge into the auxiliary combustion chamber **136**, which occurs at about 100° before TDC position. Hence, the fuel supply pump **140** may be a low pressure pump. Such a pump is less susceptible to wear and tear and is durable. Further, the disintegration and atomization of fuel by the fuel supply pump **140** helps in substantially complete combustion of the fuel in the charge. This helps the engine **100** in achieving high fuel efficiency and low unburnt fuel in the exhaust.

Further, the provision of transfer ports **116** inclined to the wall of the cylinder bore **110** facilitates a swirling motion of the scavenging fluid entering the cylinder bore **110**. The swirling motion of the scavenging fluid allows retention of large amounts of scavenging fluid prior to the removal of combustion products from the cylinder bore **110**. This improves the fuel economy by facilitating combustibility of the charge. Further, the exhaust port **132** and the exhaust valve **402** in the cylinder head **126** allow uniflow scavenging of the cylinder bore **110**. The uniflow scavenging facilitates in effective removal of combustion products during the scavenging of the cylinder bore **110** and also prevents dilution of charge by combustion products, facilitating combustion of charge. The provision of the exhaust port **132** in the cylinder head **126** allows use of a piston **112** with small skirt length. The small skirt length reduces the contact surface of the piston **112** with a wall of the cylinder bore **110** and hence reduces the friction between the two. This ensures durability and longevity of the engine **100**.

Additionally, the filter element **292** facilitates in removal of lubricant particles in the scavenging fluid entering the cylinder bore **110**, and which may otherwise participate in combustion. The removal of the lubricant particles from the scavenging fluid provides low pollutants in the exhaust emissions from the engine **100**.

## Claims

1. A two-stroke internal combustion (IC) engine (**100**) comprising:
a cylinder head (**126**) having an auxiliary combustion chamber (**136**) to achieve a first combustion of charge, wherein the cylinder head (**126**) comprises,
an exhaust port (**132**);
an exhaust valve (**402**) provided at the exhaust port (**132**) to regulate opening and closing of the exhaust port (**132**);
an inlet port (**134**) provided at the auxiliary combustion chamber (**136**) for induction of the charge; and
an inlet valve (**404**) provided at the inlet port (**134**) to regulate the induction of the charge into the auxiliary combustion chamber (**136**) through the inlet port (**134**); and
a cylinder block (**108**) having at least one cylinder bore (**110**), wherein the cylinder head (**126**) is mounted on the cylinder block (**108**), the cylinder block (**108**) comprising,
a piston (**112**) reciprocating therein to drive a crankshaft (**106**);
a main combustion chamber (**130**), formed between the piston (**112**) and the cylinder head (**126**), to achieve a second combustion of the charge; and
a plurality of transfer ports (**116**, **306**, **308**) provided annularly in a cylinder wall (**118**) along a periphery of the cylinder wall (**118**) to induct a scavenging fluid into the cylinder bore (**110**), wherein each of the plurality of transfer ports (**116**, **306**, **308**) is inclined to the cylinder wall (**118**).

2. The two-stroke IC engine (**100**) as claimed in claim 1, wherein each of the plurality of transfer ports (**116**) is formed in a shape of a truncated cone having an apex angle (α) in a range of about 10° to 30°, and wherein each of the plurality of transfer ports (**116**) comprises a first aperture (**302**) at the cylinder wall (**118**) and a second aperture (**304**) at an opening of an induction passage (**120**).

3. The two-stroke IC engine (**100**) as claimed in claim 1, wherein the plurality of transfer ports (**306**, **308**) are formed as a first set of transfer ports (**306**) and a second set of transfer ports (**308**), and wherein the first set of transfer ports (**306**) are provided alternately to the second set of transfer ports (**308**) in the cylinder wall (**118**).

4. The two-stroke IC engine (**100**) as claimed in claim 3, wherein each transfer port from the first set of transfer ports (**306**) and the second set of transfer ports (**308**) comprises a first aperture (**302**) at the cylinder wall (**118**) and a second aperture (**304**) at an opening of an induction passage (**120**).

5. The two-stroke IC engine (**100**) as claimed in claim 2 or 4, wherein the first aperture (**302**) has a diameter smaller than a diameter of the second aperture (**304**).

6. The two-stroke IC engine (**100**) as claimed in claim 3, wherein each transfer port from the first set of transfer ports (**306**) has a first apex angle (α**₁**) of about 17° and each transfer port from the second set of transfer ports (**308**) has a second apex angle (α**₂**) of about 32°.

7. The two-stroke IC engine (**100**) as claimed in claim 1, wherein the piston (**112**) is a deflector type piston.

8. The two-stroke IC engine (**100**) as claimed in claim 1 further comprising an ignition element (**138**) disposed in the auxiliary combustion chamber (**136**), wherein the ignition element (**138**) is disposed substantially perpendicular to a central axis of the auxiliary combustion chamber (**136**).

9. The two-stroke IC engine (**100**) as claimed in claim 1 further comprising an ignition element (**138**) disposed in the auxiliary combustion chamber (**136**), wherein the ignition element (**138**) is disposed substantially perpendicular to a vertical axis of the piston (**112**).

10. The two-stroke IC engine (**100**) as claimed in claim 1, wherein a size of the exhaust port (**132**) is greater than a size of the inlet port (**134**).

11. The two-stroke IC engine (**100**) as claimed in claim 1, wherein an area of the exhaust port (**132**) is at least twice an area of the inlet port (**134**).

12. The two-stroke IC engine (**100**) as claimed in claim 1, wherein the cylinder head (**126**) comprises a valve train assembly (**144**), and wherein the valve train assembly (**144**) obtains a drive from the crankshaft (**106**).

13. The two-stroke IC engine (**100**) as claimed in claim 12, wherein the valve train assembly (**144**) obtains a drive from the crankshaft (**106**) through a chain drive assembly (**600**).

14. The two-stroke IC engine (**100**) as claimed in claim 1 further comprising a fuel supply pump (**140**) in fluid connection with the auxiliary combustion chamber (**136**) through an inlet port to induct the charge into the auxiliary combustion chamber (**136**), wherein the fuel supply pump (**140**) obtains a drive from the crankshaft (**106**) through a chain drive assembly (**600**), the fuel supply pump (**140**) being a low pressure pump.

15. The two-stroke IC engine (**100**) as claimed in claim 1 comprising:
an induction valve (**104**) to allow unidirectional flow of the scavenging fluid into a crankcase (**102**) of the two-stroke IC engine (**100**); and
a filter element (**202**) to filter the scavenging fluid entering a cylinder bore (**110**) of the two-stroke IC engine (**100**).

## Patentansprüche

1. Zweitaktverbrennungsmotor (100), umfassend:
einen Zylinderkopf (126), welcher eine Hilfsbrennkammer (136) aufweist, um eine erste Verbrennung einer Füllung zu erzielen, wobei der Zylinderkopf (126) aufweist,
einen Auslasskanal (132);
ein Auslassventil (402), das an dem Auslasskanal (132) vorgesehen ist, um ein Öffnen und ein Schließen des Auslasskanals (132) zu regeln;
einen Ansaugkanal (134), welche an der Hilfsbrennkammer (136) vorgesehen ist, zur Einführung der Füllung; und
ein Ansaugventil (404), welches an dem Ansaugkanal (134) vorgesehen ist, um das Einführen der Füllung in die Hilfsbrennkammer (136) durch den Ansaugkanal (134) zu regeln; und
einen Zylinderblock (108), welcher zumindest eine Zylinderbohrung (110) aufweist, wobei der Zylinderkopf (126) an dem Zylinderblock (108) montiert ist, und der Zylinderblock (108) umfasst,
einen Kolben (112), der sich darin hin und her bewegt, um eine Kurbelwelle (106) anzutreiben;
eine Hauptbrennkammer (130), welche zwischen dem Kolben (112) und dem Zylinderkopf (126) gebildet ist, um eine zweite Verbrennung der Füllung zu erzielen; und
eine Vielzahl von Überströmkanälen (116, 306, 308), welche ringförmig in einer Zylinderwand (118) entlang eines Randbereichs der Zylinderwand (118) vorgesehen ist, um ein reinigendes Fluid in die Zylinderbohrung (110) einzuführen, wobei jeder der Vielzahl von Überströmkanälen (116, 306, 308) zu der Zylinderwand (118) geneigt ist.

2. Zweitaktverbrennungsmotor (100) gemäß Anspruch 1, wobei jeder der Vielzahl von Überströmkanälen (116) in Form eines Kegelstumpf mit einem Öffnungswinkel (a) in einem Bereich von ungefähr 10° bis 30° gebildet ist, und wobei jeder der Vielzahl von Überströmkanälen (116) einen ersten Durchlass (302) an der Zylinderwand (118), und einen zweiten Durchlass (304) an einer Öffnung eines Ansaugdurchgangs (120) aufweist.

3. Zweitaktverbrennungsmotor (100) gemäß Anspruch 1, wobei die Vielzahl von Überströmkanälen (306, 308) als eine erste Gruppe von Überströmkanälen (306) und eine zweite Gruppe von Überströmkanälen (308) gebildet ist, und wobei die erste Gruppe von Überströmkanälen (306) wechselweise zu der zweiten Gruppe von Überströmkanälen (308) in der Zylinderwand (118) vorgesehen ist.

4. Zweitaktverbrennungsmotor (100) gemäß Anspruch 3, wobei jeder Überströmkanal der ersten Gruppe von Überströmkanälen (306) und der zweiten Gruppe von Überströmkanälen (308) einen ersten Durchlass (302) an der Zylinderwand (118) und einen zweiten Durchlass (304) an einer Öffnung eines Ansaugdurchgangs (120) aufweist.

5. Zweitaktverbrennungsmotor (100) gemäß Anspruch 2 oder 4, wobei der erste Durchlass (302) einen Durchmesser aufweist, der kleiner als ein Durchmesser des zweiten Durchlasses (304) ist.

6. Zweitaktverbrennungsmotor (100) gemäß Anspruch 3, wobei jeder Überströmkanal der ersten Gruppe von Überströmkanälen (306) einen ersten Öffnungswinkel (α₁) von ungefähr 17° aufweist, und jeder Überströmkanal der zweiten Gruppe von Überströmkanälen (308) einen zweiten Öffnungswinkel (α₂) von ungefähr 32° aufweist.

7. Zweitaktverbrennungsmotor (100) gemäß Anspruch 1, wobei der Kolben (112) ein Kolben eines ablenkenden Typs ist.

8. Zweitaktverbrennungsmotor (100) gemäß Anspruch 1, ferner umfassend ein Zündelement (138), welches in der Hilfsbrennkammer (136) angeordnet ist, wobei das Zündelement (138) im Wesentlichen senkrecht zu einer Mittelachse der Hilfsbrennkammer (136) angeordnet ist.

9. Zweitaktverbrennungsmotor (100) gemäß Anspruch 1, ferner umfassend ein Zündelement (138), welches in der Hilfsbrennkammer (136) angeordnet ist, wobei das Zündelement (138) im Wesentlichen senkrecht zu einer Vertikalachse des Kolbens (112) angeordnet ist.

10. Zweitaktverbrennungsmotor (100) gemäß Anspruch 1, wobei eine Größe des Auslasskanals (132) größer als eine Größe des Ansaugkanals (134) ist.

11. Zweitaktverbrennungsmotor (100) gemäß Anspruch 1, wobei eine Fläche des Auslasskanals (132) zumindest zweimal so groß wie eine Fläche des Ansaugkanals (134) ist.

12. Zweitaktverbrennungsmotor (100) gemäß Anspruch 1, wobei der Zylinderkopf (126) einen Ventilantrieb (144) aufweist, und wobei der Ventilantrieb (144) einen Antrieb von der Kurbelwelle (106) erhält.

13. Zweitaktverbrennungsmotor (100) gemäß Anspruch 12, wobei der Ventilantrieb (144) einen Antrieb von der Kurbelwelle (106) mittels einer Kettenantriebsbaugruppe (600) erhält.

14. Zweitaktverbrennungsmotor (100) gemäß Anspruch 1, ferner umfassend eine Kraftstoffzufuhrpumpe (140), in Fluidverbindung mit der Hilfsbrennkammer (136) mittels eines Ansaugkanals, um die Füllung in die Hilfsbrennkammer (136) einzuführen, wobei die Kraftstoffzufuhrpumpe (140) einen Antrieb von der Kurbelwelle (106) mittels einer Kettenantriebsbaugruppe (600) erhält, und die Kraftstoffzufuhrpumpe (140) eine Niederdruckpumpe ist.

15. Zweitaktverbrennungsmotor (100) gemäß Anspruch 1, umfassend:
ein Einführventil (104), um einen unidirektionalen Fluss des reinigenden Fluids in ein Kurbelgehäuse (102) des Zweitaktverbrennungsmotors (100) zu ermöglichen; und
ein Filterelement (202), um das reinigende Fluid, welches in eine Zylinderbohrung (110) des Zweitaktverbrennungsmotors (100) eindringt, zu filtern.

## Revendications

1. Moteur à combustion interne (IC) à deux temps (100), comprenant :
une culasse de cylindre (126) comportant une chambre de combustion auxiliaire (136) pour obtenir une première combustion de charge, dans lequel la culasse de cylindre (126) comprend,
un orifice d'échappement (132) ;
une soupape d'échappement (402) prévue à l'orifice d'échappement (132) pour réguler l'ouverture et la fermeture de l'orifice d'échappement (132) ;
un orifice d'entrée (134) prévu, dans la chambre de combustion auxiliaire (136), pour l'admission de la charge ; et
une soupape d'entrée (404) prévue à l'orifice d'entrée (134) pour réguler l'admission de la charge dans la chambre de combustion auxiliaire (136) à travers l'orifice d'entrée (134) ; et
un bloc cylindre (108) comportant au moins un alésage de cylindre (110), dans lequel la culasse de cylindre (126) est montée sur le bloc cylindre (108), le bloc cylindre (108) comprenant :
un piston (112) se déplaçant en va-et-vient dans celui-ci pour entraîner un vilebrequin (106) ;
une chambre de combustion principale (130), formée entre le piston (112) et la culasse de cylindre (126), pour obtenir une seconde combustion de la charge ; et
une pluralité d'orifices de transfert (116, 306, 308) prévus de façon annulaire dans une paroi de cylindre (118) le long d'une périphérie de la paroi de cylindre (118) pour entraîner un fluide d'évacuation dans l'alésage de cylindre (110), dans lequel chacun parmi la pluralité d'orifices de transfert (116, 306, 308) est incliné vers la paroi de cylindre (118).

2. Moteur IC à deux temps (100) selon la revendication 1, dans lequel chacun parmi la pluralité d'orifices de transfert (116) présente une forme d'un cône tronqué possédant un angle de sommet (α) dans une plage d'environ 10° à 30°, et dans lequel chacun parmi la pluralité d'orifices de transfert (116) comprend une première fenêtre (302) sur la paroi de cylindre (118) et une seconde fenêtre (304) à une ouverture d'un passage d'admission (120).

3. Moteur IC à deux temps (100) selon la revendication 1, dans lequel la pluralité d'orifices de transfert (306, 308) présentent la forme d'un premier jeu d'orifices de transfert (306) et d'un second jeu d'orifices de transfert (308), et dans lequel le premier jeu d'orifices de transfert (306) sont prévus de façon alternée par rapport au second jeu d'orifices de transfert (308) dans la paroi de cylindre (118).

4. Moteur IC à deux temps (100) selon la revendication 3, dans lequel chaque orifice de transfert du premier jeu d'orifices de transfert (306) et du second jeu d'orifices de transfert (308) comprend une première fenêtre (302) sur la paroi de cylindre (118) et une seconde fenêtre (304) à une ouverture d'un passage d'admission (120).

5. Moteur IC à deux temps (100) selon la revendication 2 ou 4, dans lequel la première fenêtre (302) possède un diamètre inférieur à un diamètre de la seconde fenêtre (304).

6. Moteur IC à deux temps (100) selon la revendication 3, dans lequel chaque orifice de transfert du premier jeu d'orifices de transfert (306) possède un premier angle de sommet (α₁) d'environ 17° et chaque orifice de transfert du second jeu d'orifices de transfert (308) possède un second angle de sommet (α₂ ) d'environ 32°.

7. Moteur IC à deux temps (100) selon la revendication 1, dans lequel le piston (112) est un piston de type déflecteur.

8. Moteur IC à deux temps (100) selon la revendication 1, comprenant en outre un élément d'allumage (138) disposé dans la chambre de combustion auxiliaire (136), dans lequel l'élément d'allumage (138) est disposé de façon sensiblement perpendiculaire à un axe central de la chambre de combustion auxiliaire (136).

9. Moteur IC à deux temps (100) selon la revendication 1, comprenant en outre un élément d'allumage (138) disposé dans la chambre de combustion auxiliaire (136), dans lequel l'élément d'allumage (138) est disposé de façon sensiblement perpendiculaire à un axe vertical du piston (112).

10. Moteur IC à deux temps (100) selon la revendication 1, dans lequel une taille de l'orifice d'échappement (132) est supérieure à une taille de l'orifice d'entrée (134).

11. Moteur IC à deux temps (100) selon la revendication 1, dans lequel une zone de l'orifice d'échappement (132) est au moins deux fois une zone de l'orifice d'entrée (134).

12. Moteur IC à deux temps (100) selon la revendication 1, dans lequel la culasse de cylindre (126) comprend un ensemble de commande des soupapes (144), et dans lequel l'ensemble de commande des soupapes (144) obtient un entraînement à partir du vilebrequin (106).

13. Moteur IC à deux temps (100) selon la revendication 12, dans lequel l'ensemble de commande des soupapes (144) obtient un entraînement à partir du vilebrequin (106) par l'intermédiaire d'un ensemble d'entraînement par chaîne (600).

14. Moteur IC à deux temps (100) selon la revendication 1, comprenant en outre une pompe d'alimentation en carburant (140) en raccordement fluidique avec la chambre de combustion auxiliaire (136) par l'intermédiaire d'un orifice d'entrée pour entraîner la charge dans la chambre de combustion auxiliaire (136), dans lequel la pompe d'alimentation en carburant (140) obtient un entraînement à partir du vilebrequin (106) par l'intermédiaire d'un ensemble d'entraînement par chaîne (600), la pompe d'alimentation en carburant (140) étant une pompe à basse pression.

15. Moteur IC à deux temps (100) selon la revendication 1, comprenant :
une soupape d'admission (104) pour permettre un écoulement unidirectionnel du fluide d'évacuation dans un carter de moteur (102) du moteur IC à deux temps (100) ; et
un élément filtre (202) pour filtrer le fluide d'évacuation entrant dans un alésage de cylindre (110) du moteur IC à deux temps (100).
